Europäisches Patentamt

European Patent Office

Office européen des brevets

(11) Veröffentlichungsnummer: **0 178 446**
**B1**

(12) # EUROPÄISCHE PATENTSCHRIFT

(45) Veröffentlichungstag der Patentschrift:
**25.01.89**

(51) Int. Cl.⁴: **H02P 5/178**, H02M 3/158

(21) Anmeldenummer: **85111298.7**

(22) Anmeldetag: **06.09.85**

(54) Gleichstrom-Halbleitersteller-Anordnung.

(30) Priorität: **14.09.84 DE 3433886**

(43) Veröffentlichungstag der Anmeldung:
**23.04.86 Patentblatt 86/17**

(45) Bekanntmachung des Hinweises auf die Patenterteilung:
**25.01.89 Patentblatt 89/4**

(84) Benannte Vertragsstaaten:
**DE FR GB IT NL SE**

(56) Entgegenhaltungen:
FR-A- 1 299 040
GB-A- 1 371 418
US-A- 4 417 197

**IEEE TRANSACTIONS ON INDUSTRY APPLICATIONS,
Band IA-17, Nr. 6, 1981, Seiten 626-631, New York, US;
B.K. BOSE "A microprocessor-based control system
for a near-term electric vehicle"
REVUE DE L'ASSOCIATION FRANCAISE des AMIS DES
CHEMINS DE FER, Sonderdruck aus Nr 322, Januar 1977,
Invry, J. Moysé, "Les locomotives à hacheur",
Seiten 1-12**

(73) Patentinhaber: **Siemens Aktiengesellschaft Berlin und
München, Wittelsbacherplatz 2, D-8000 München 2(DE)**

(72) Erfinder: **Reick, Horst, Dipl.-Ing., Holzleite 4,
D-8521 Effeltrich(DE)**
Erfinder: **Kratz, Gerhard, Adelsgasse 17,
D-8551 Heroldsbach(DE)**

## Beschreibung

Die Erfindung betrifft eine Gleichstrom-Halbleitersteller-Anordnung gemäß dem Oberbegriff des Anspruches 1.

Eine solche Anordnung ist durch den von Jacques Moyse verfaßten und in dem Sonderdruck Nr. 322, Seiten 1 bis 12 der Revue de l'Association Française des Amis des Chemins de Fer vom Januar 1977 veröffentlichten Aufsatz "Les locomotives à hacheur, courant continu 1500 V, BB7200 de la SNCF" bekannt. Bei dieser Anordnung sind zur Verminderung der Stromwelligkeit den einzelnen Fahrmotoren der Lokomotive je drei parallelliegende einzelne Drosseln vorgeschaltet.

Bei einer anderen in der US-A 4 417 197 beschriebenen Anordnung sind als Halbleiterventile Transistoren oder Thyristoren verwendet. Der in Reihe mit dem jeweils durchlässigen Halbleiterventil geschaltete induktive Widerstand bildet zusammen mit einem parallel zu dem Lastwiderstand angeordneten Glättungskondensator ein Tiefpaßfilter. Die nicht miteinander gekoppelten induktiven Widerstände bewirken einen verzögerten Stromanstieg und -abfall, so daß die durch die Taktung hervorgerufene Stromwelligkeit verringert wird. Am Kondensator und damit am Lastwiderstand steht eine wesentlich höhere Spannung an als am Eingang der Halbleiterventile. Dabei hat die Spannung am Kondensator und am Lastwiderstand eine Welligkeit von der doppelten Frequenz der Pulsfrequenz. Da die Halbleiterventile des Umrichters gegenüber anderen bekannten Chopperschaltungen nur mit der halben Taktfrequenz betrieben zu werden brauchen, werden die Schaltgeräusche der Halbleiterelemente herabgesetzt. Die in der US-A 4 417 197 beschriebene Ausführung ist jedoch nicht geeignet, um unterschiedliche induktive Verbraucher, wie Motoren, zu speisen und es können Geräuschanregungen an der Last auftreten.

Aus der GB-A 1 007 169 ist ein Gleichspannungswandler bekannt, bei dem eine Last über einen Halbleitersteller, der eine Parallelschaltung zweier steuerbarer Halbleiterventile gleicher Durchlaßrichtung enthält, aus einer Gleichspannungsquelle gespeist ist. Es ist eine Einrichtung zum Erzeugen von Taktfrequenzsignalen in der Weise vorgesehen, daß die Halbleiterventile abwechselnd um 180° gegeneinander versetzt geöffnet und geschlossen werden. Die Halbleiterventile sind ausgangsseitig auf einen Spartransformator mit Mittenanzapfung geschaltet, wobei der eingangsseitige Verbindungspunkt der Halbleiterventile mit einem Pol der Gleichspannungsquelle und die Mittenanzapfung mit einem Pol eines Lastwiderstandes verbunden ist. Die Verbindungspunkte der Halbleiterventile mit dem Spartransformator sind jeweils über eine Diode an den anderen Pol der Last angeschlossen. Bei dieser Ausführung ist die Last durch einen ohmschen Verbraucher verkörpert, wie dies z.B. in elektronischen Schaltsystemen von Vermittlungen, Fernbedienungseinrichtungen oder Computern der Fall ist. Als Halbleiterventile werden Transistoren verwendet, deren Steuerspannungen von mit dem Spartransformator gekoppelten Wicklungen abgeleitet werden. Dabei werden die beiden Transistoren abwechselnd um 180° gegeneinander geöffnet und geschlossen, so daß am Verbraucher eine aus Halbwellen zusammengesetzte Gleichspannung ansteht, die sich durch die zeitliche Addition der Spannungsblöcke ergibt. Diese am Verbraucher anstehende Gleichspannung hat den halben Wert der an den Gleichspannungswandler angelegten Batteriespannung und ist nicht lückenlos. Der Spartransformator des bekannten Gleichspannungswandlers wirkt also für die angelegte Batteriespannung als symmetrischer Spannungsteiler. Eine Steuerung der an den Verbraucher angelegten Spannung oder des Stromes ist nicht vorgesehen. Mit diesem bekannten Gleichspannungswandler kann also eine induktive oder ohmsche Last in der Leistung nicht gesteuert werden.

Aus der GB-A 1 371 418 sind Parallelschaltungen von Transistoren bekannt, bei denen Maßnahmen zur Erzielung einer gleichen Stromführung in jedem Transistor durch Verwendung von Koppeltransformatoren getroffen sind.

Aus der Zeitschrift IEE Transactions on Industry Applications, Band 1A-17, No. 6, November/Dezember 1981, Seiten 626 bis 631 ist ein durch einen Mikroprozessor gesteuertes Antriebssystem bekannt, bei dem ein Gleichstrommotor aus einer Batterie über einen Transistor gesteuert wird. Dem Gleichstrommotor ist eine Freilaufdiode parallelgeschaltet. Zum Betrieb des Gleichstrommotors als generatorische Nutzbremse ist ein weiterer Transistor mit einer weiteren Freilaufdiode vorgesehen.

Der Erfindung liegt die Aufgabe zugrunde, bei einer Steuereinrichtung der eingangs genannten Art die Welligkeit des Laststromes an einer in der Leistung steuerbaren Last mit kleiner Induktivität weiter zu verringern und die durch die Pulsung hervorgerufenen Geräusche an der Last wirksam herabzusetzen.

Diese Aufgabe wird erfindungsgemäß durch die Merkmale des kennzeichnenden Teils des Anspruchs 1 gelöst.

Dadurch wird die Taktfrequenz an der induktiven Last vervierfacht und die Stromschwingungsbreite auf etwa 1/16 verkleinert, so daß die tonalen Körperschallanteile der Pulsfrequenz sowie das Gewicht und das Volumen der gesamten Einrichtung wesentlich geringer gehalten werden können als bei den bekannten Ausführungen. Dabei läßt sich bei Ausbildung der induktiven Last als Gleichstrommotor durch einen konstanten Aussteuergrad der Halbleiterventile in den Stufen von zumindest annähernd 0,25, 0,5, 0,75 oder 1 bei Einhaltung einer Gleichspannung am Anker der Motor in mehreren Drehzahlbereichen betrieben, bei denen ein Minimum der Stromwelligkeit erreichbar ist.

Bei Verwendung eines Gleichstrommotors als induktive Last ist es vorteilhaft, wenn über die Steuereinrichtung zur Drehzahlsteuerung in den Bereichen zwischen den oben genannten Stufen der Aussteuergrad des Erregerstromstellers geändert wird. Auf diese Weise kann im gesamten Drehzahlbereich mit der Stromwelligkeit Null gesteuert werden.

Durch entsprechende weitere parallele Anordnungen von Halbleiterventilen und Saugtransformatoren mit Mittenanzapfung läßt sich die Stromschwingungsbreite und damit die Stromwelligkeit schon bei beliebigem Aussteuergrad minimieren.

Ausführungsbeispiele der Erfindung sind in der Zeichnung schematisch dargestellt. Darin zeigen:

Fig. 1 eine Anordnung zum Betrieb eines Elektrofahrzeuges,

Fig. 2 das Prinzip der Ansteuerung eines in Fig. 1 gezeigten Halbleiterstellers, der die an eine Gleichspannungsquelle angeschlossene induktive Last speist,

Fig. 3 ein Diagramm zu Fig. 2,

Fig. 4 eine Schaltung für den Bremsbetrieb eines Elektrofahrzeuges,

Fig. 5 eine weitere Anordnung zum Betrieb einer induktiven Last und

Fig. 6 ein Diagramm zu den Figuren 1, 2 und 5.

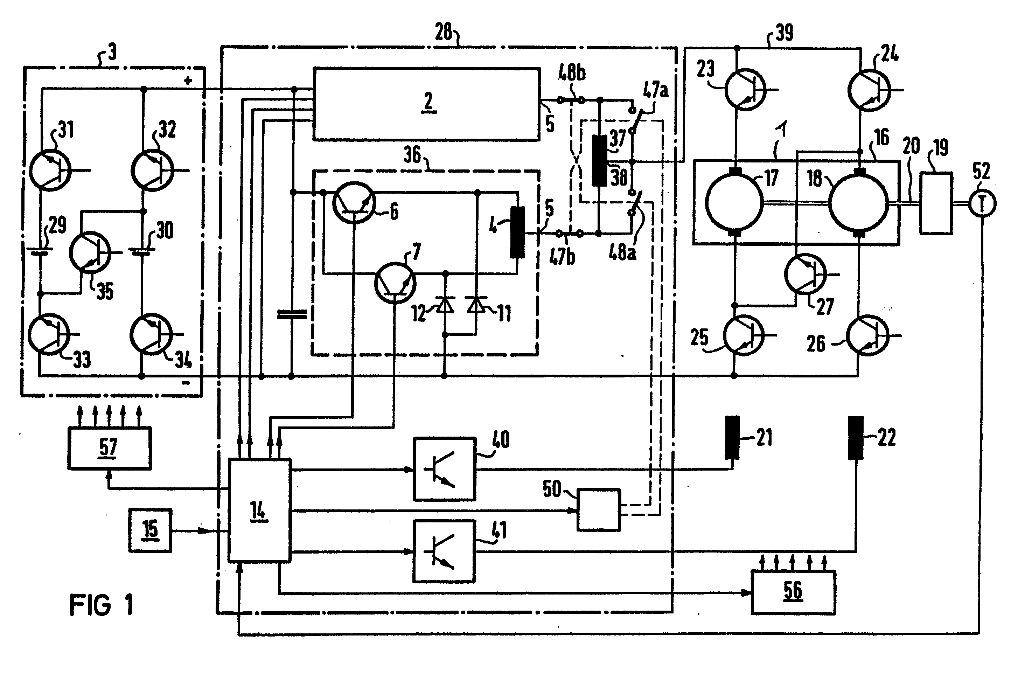

Fig. 1 zeigt eine Anordnung zur Steuerung einer induktiven Last 1, im vorliegenden Fall zur Drehzahlsteuerung eines Gleichstromantriebs für ein Elektrofahrzeug, bei dem zwei Anker 17, 18 an einer gemeinsamen auf ein Antriebsrad 19 arbeitenden Welle 20 angeordnet sind. Mit 21, 22 sind Erregerwicklungen des Gleichstrommotors bezeichnet. Die Anker 17, 18 sind über Halbleiterschalter 23 bis 27 und einen Anker- und Erregerstromsteller 28 aus in Gruppen unterteilten Batterien 29, 30 gespeist, denen Halbleiterschalter 31 bis 35 zugeordnet sind. Zur Drehzahlsteuerung werden die Batterien 29, 30 und/oder die Anker 17, 18 mittels eines Drehzahl-Sollwertgebers 15 über die von einer Steuereinheit 14 über die Schalteinrichtung 56 angesteuerten Schalter 23 bis 27 bzw. über die Schalteinrichtung 57 angesteuerten Schalter 31 bis 35 von Serienauf Parallelschaltung und umgekehrt umgeschaltet.

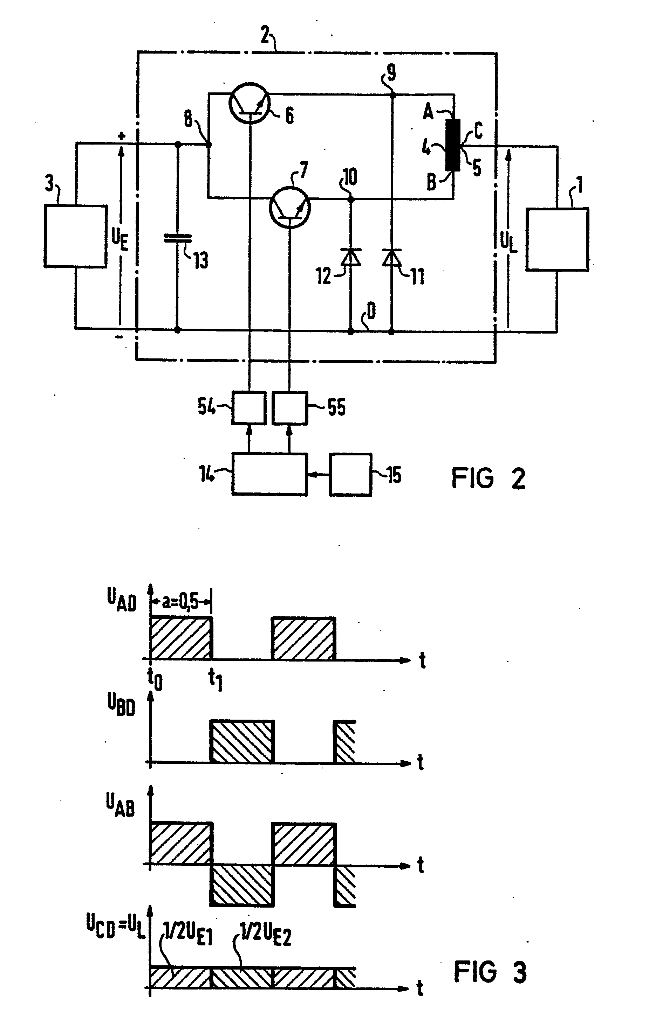

Der Anker- und Erregerstromsteller 28 für den Antrieb 16 enthält einen Halbleitersteller 2, der – wie Fig. 2 zeigt – aus einer Parallelschaltung von mindestens zwei steuerbaren, auf einen Saugtransformator 4 mit Mittenanzapfung 5 geschalteten Halbleiterventilen 6, 7 (Transistoren) gebildet ist. Der Gleichstrommotor 1 ist über den Halbleitersteller 2 an eine Gleichstromquelle 3 angeschlossen, der ein Stützkondensator 13 parallel liegt. Der Verbindungspunkt 8 der Halbleiterventile 6, 7 gleicher Durchlaßrichtung ist mit einem + Pol der Gleichspannungsquelle 3 und die Mittenanzapfung 5 des Saugtransformators 4 mit einem Pol der induktiven Last 1 verbunden. Der Verbindungspunkt 9 des Halbleiterventils 6 mit dem Saugtransformator 4 ist über eine Freilaufdiode 11 an den Minus-Pol angeschlossen. In analoger Weise ist der Verbindungspunkt 10 des Halbleiterventils 7 mit dem Saugtransformator 4 über eine Freilaufdiode 12 mit dem Minus-Pol verbunden.

Die beiden Halbleiterventile 6, 7 werden in der Taktfrequenz um 180° gegeneinander versetzt geöffnet und geschlossen. Hierzu dient die Steuereinheit 14, die von einem Sollwertgeber 15 ansteuerbar ist und zwei um 180° elektrisch versetzte Taktfrequenzsignale erzeugt, die über Stellglieder 54, 55 die beiden Halbleiterventile 6, 7 steuern.

Für die in Fig. 2 gezeigte Schaltung ist angenommen, daß die Halbleiterventile 6, 7 mit einem Aussteuergrad a gleich 0,5 betrieben werden. Es ergeben sich dann die in Fig. 3 gezeigten Spannungen an den mit A bis D bezeichneten Punkten. Im Zeitpunkt $t_0$ wird das Halbleiterventil 6 durch ein Taktfrequenzsignal mit einem Puls-Pausenverhältnis von 0,5 geöffnet. Damit steht am Punkt A die Eingangsspannung über die vorgegebene Zeitspanne an. Während dieser Einschaltzeit, in der das Halbleiterventil 7 geschlossen ist, wird ein Stromfluß in der induktiven Last 1 über die Freilaufdiode 12 und über den Teil B, C des Saugtransformators 4 aufrechterhalten. Dadurch wird das Potential des Punktes D zum Punkt B verschoben und der Saugtransformator 4 wirkt für die am Punkt A anstehende Spannung als symmetrischer Spannungsteiler, so daß am Punkt C die halbe Spannung $1/2U_{E1}$ der Gleichspannungsquelle 3 ansteht.

Zum Zeitpunkt $t_1$ wird dadurch, daß das von der Steuereinheit 14 gegebene Taktfrequenzsignal endet, das Halbleiterventil 6 geschlossen und durch ein über das Stellglied 55 geleitetes Taktfrequenzsignal das Halbleiterventil 7 geöffnet. Über die Freilaufdiode 11 und dem Teil A, C des Saugtransformators 4 wird der Stromfluß in der induktiven Last 1 aufrechterhalten. Während der Öffnungszeit des Halbleiterventils 7 steht am Punkt B des Saugtransformators 4 die Eingangsspannung an. Da das Potential des Punktes D über die geflutete Freilaufdiode 11 zum Punkt A verschoben wird, wirkt der Saugtransformator als symmetrischer Spannungsteiler für die am Punkt B anstehende Eingangsspannung, so daß am Punkt C die halbe Spannung $1/2U_{E2}$ der Gleichspannungsquelle ansteht. Dadurch daß die Halbleiterventile 6, 7 bei einem Aussteuergrad von 0, 5 abwechselnd um 180° gegeneinander geöffnet und geschlossen werden, liegt am Verbraucher eine lückenlose Gleichspannung an, die sich durch zeitliche Addition der Spannungsblöcke $1/2U_{E1}$ + $1/2U_{E2}$ ergibt.

In Fig. 1 ist parallel zu dem Halbleitersteller 2 ein weiterer Halbleitersteller 36 geschaltet, der gleich aufgebaut ist wie der Halbleitersteller 2. Die Mittenanzapfung 5 der Saugtransformatoren 4 der beiden Halbleitersteller 2 und 36 ist mit den Enden eines dritten Saugtransformators 37 mit Mittenanzapfung 38 verbunden, wobei die Mittenanzapfung 38 des dritten Saugtransformators 37 an den + Pol der Sammelschiene 39 angeschlossen ist. Beide Halbleitersteller 2, 36 werden durch von der Steuereinheit 14 erzeugte Taktfrequenzsignale mit gleichem Aussteuergrad a, aber um 90° elektrisch gegeneinander versetzt, ausgesteuert, so daß die dem dritten Saugtransformator zugeführten Ausgangsspannungen um 180° gegeneinander versetzt sind. Von der Steuereinrichtung sind auch die Erregerwicklungen 21, 22 über je einen an sich bekannten Erregerstrom-Halbleitersteller 40, 41 ansteuerbar. Die Halbleiterventile 6, 7 werden stufenweise mit einem konstanten Aussteuergrad a von zumindest annähernd 0,25, 0,5, 0,75 oder 1 betrieben, um an den Ankern eine lückenlose Gleichspannung zu erzeugen. Hierbei ergibt sich, wie dies im Prinzip bereits in Fig. 3 zur Fig. 2 dargestellt ist, an den Ankern 17, 18 eine lückenlose Gleichspannung mit einer Höhe von 25, 50, 75 oder 100% der angelegten Batteriespannung.

Zur Drehzahlsteuerung in den Zwischenbereichen kann der Aussteuergrad der Erregerstromsteller 40, 41 geändert werden. Dabei ist es vorteilhaft, die Steuereinheit 14 mit einem Rechner auszurüsten, dem als Istwert die Spannung einer Tachomaschine 52 zugeführt wird. Für eine entsprechende Sollwert-Vorgabe bestimmt der Rechner, welcher Aussteuergrad 0,25, 0,5, 0,75 oder 1 für das Erreichen des Stromwelligkeitsminimums vorgegeben werden muß und steuert die Erregerstromsteller 40, 41 dann so, daß die vorgegebene Drehzahl erreicht wird.

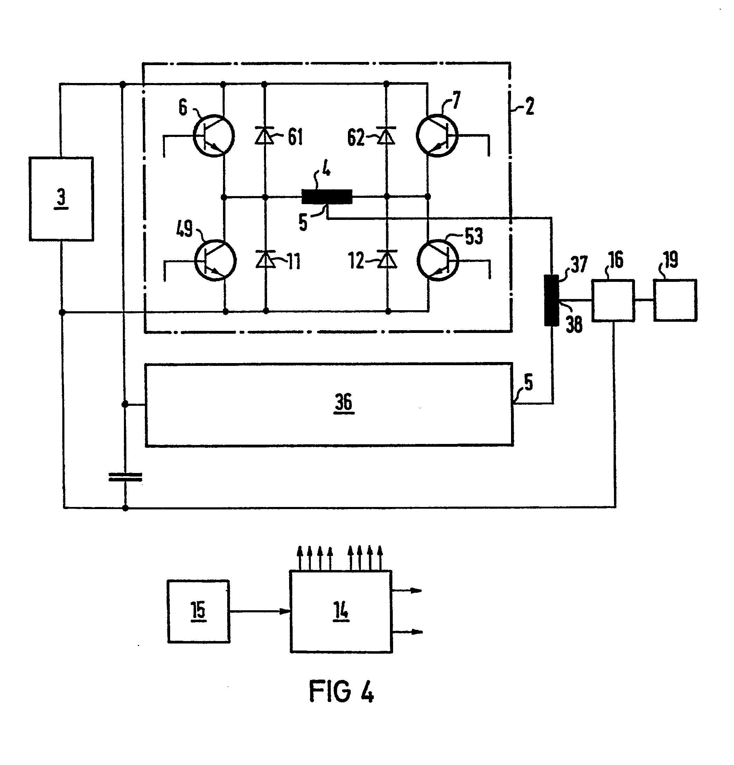

Zum Bremsen wird der Saugtransformator 4 zweckmäßigerweise in einer an sich bekannten Brückenschaltung von Halbleiterventilen 6, 7, 49, 53 angeordnet, wobei jedem Halbleiterventil eine Freilaufdiode 11 bzw. 12 bzw. 61 bzw. 62 parallelgeschaltet ist, wie dies Fig. 4 zeigt.

Zweckmäßigerweise ist eine Schalteinrichtung 50 (Fig. 1) vorgesehen, die bei Abschaltung oder Ausfall eines Stellers, z.B. des Stellers 36 den Antrieb 16 automatisch auf den noch vorhandenen Steller 2 schaltet, wobei ein Schalter 47a geschlossen und der Steller 36 durch Öffnen des zweiten Schalters 47b abgeschaltet wird. Nach dem Abschalten des Stellers 36 kann der Antriebsmotor allein über den Steller 2 betrieben werden. Dieser Fall ist in Fig. 2 im Prinzip dargestellt. Hierbei wird die Taktfrequenz an der induktiven Last 1 verdoppelt und die Stromschwingungsbreite gegenüber der Schaltungsanordnung gamäß Fig. 1 auf ein Viertel vergrößert. Werden in der Steuereinrichtung Taktfrequenzsignale für einen konstanten Aussteuergrad der Halbleiterventile von zumindest annähernd nur 0,5 oder 1 erzeugt, so wird erreicht, daß am Gleichstrommotor eine Gleichspannung ohne Welligkeit ansteht. Geräuschanregungen durch die Pulsfrequenz können damit nicht mehr auftreten.

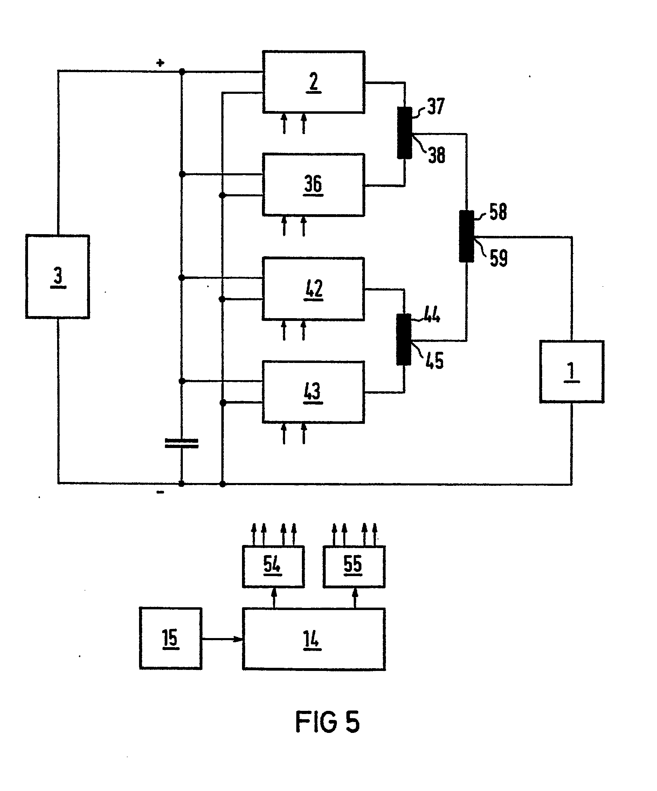

Fig. 5 zeigt eine weitere parallele Anordnung von Stellern und Saugtransformatoren zur weiteren Verringerung der Stromschwingungsbreite und Vergrößerung der Anzahl der Minima der Stromwelligkeit. Parallel zu den beiden Halbleiterstellern 2, 36 mit dem nachgeschalteten dritten Saugtransformator 37 ist eine weitere Parallelschaltung von zwei Halbleiterstellern 42, 43 mit einem nach geschalteten weiteren dritten Saugtransformator 44 vorgesehen und die Mittenanzapfungen 38, 45 der dritten Saugtransformatoren 37, 44 sind auf einen vierten Saugtransformator 58 geschaltet, dessen Mittenanzapfung 59 mit dem Pluspol der induktiven Last 1 verbunden ist.

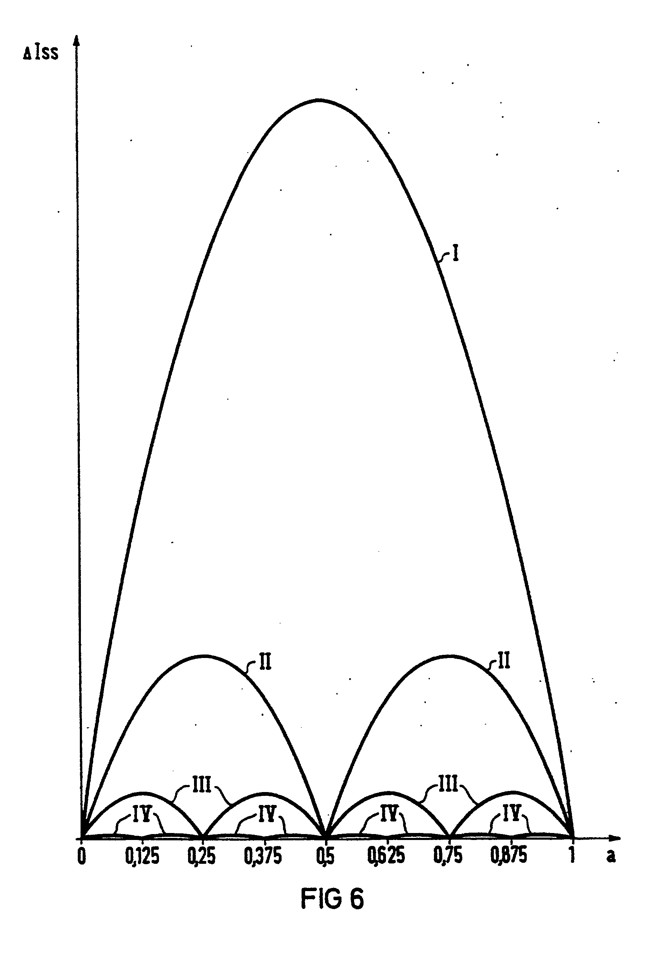

In Fig. 6 ist die Abhängigkeit der Stromschwingungsbreite $\Delta I_{ss}$ vom Aussteuergrad a bei verschiedenen Stellern dargestellt. Es gilt

Kurve I für Steller ohne Saugtransformator,
Kurve II für eine Schaltungsanordnung mit einem Saugtransformator (Fig. 2),
Kurve III für eine Anordnung mit zwei Stellern (drei Saugtransformatoren) gemäß Fig. 1,
Kurve IV für eine Anordnung mit vier Stellern (sieben Saugtransformatoren) gemäß Fig. 5.
Für die erfindungsgemäße Schaltung gilt

$$\frac{\Delta I_{ss}}{\Delta I_{ssn}} = 4 \cdot n$$

Darin bedeutet:
$\Delta I_{ss}$: Schwingungsbreite des Stromes eines Stellers,
$\Delta I_{ssn}$: Schwingungsbreite des Stromes mit n Stellern (n = Anzahl der Steller, die unmittelbar mit der Batterie verbunden sind).
Dabei ist die Anzahl der Minima
$m = 2n + 1$
Für die Schaltung gemäß Fig. 5 sind die Minima bei 0, 0,125, 0,25, 0,375, 0,5, 0,625, 0,75, 0,875 und 1.

Bei einem Antrieb für ein Elektroauto mit einer Leistung von 40 kW besitzt der in einer Schaltung gemäß Fig. 2 angeordnete induktionsarme Saugtransformator mit geschlossenem Schnittbandkern beispielsweise eine Induktivität von etwa μH.

Bezugszeichenliste

 1 induktive Last
 2 Halbleitersteller
 3 Gleichstromquelle
 4 Saugtransformator
 5 Mittenanzapfung
 6, 7 Halbleiterventile
 8, 9, 10 Verbindungspunkte
 11, 12 Freilaufdiode
 13 Stützkondensator
 14 Steuereinheit
 15 Sollwertgeber
 16 Antrieb
 17, 18 Anker
 19 Antriebsrad
 20 Welle
 21, 22 Erregerwicklungen
 23–27 Halbleiterschalter
 28 Anker- und Erregerstromsteller
 29, 30 Batterien
 31–35 Halbleiterschalter
 36 Halbleitersteller
 37 dritter Saugtransformator
 38 Mittenanzapfung
 39 Sammelschiene
 40, 41 Erregerstrom-Halbleitersteller
 42, 43 Halbleitersteller
 44 weiterer dritter Saugtransformator
 45 Mittenanzapfung
 47a, b Schalter
 48a, b Schalter
 49 Halbleiterventil
 50 Schalteinrichtung
 52 Tachomaschine
 53 Halbleiterventil
 54, 55 Stellglieder
 56, 57 Schalteinrichtung
 58 vierter Saugtransformator
 59 Mittenanzapfung
 61, 62 Freilaufdiode

## Patentansprüche

1. Gleichstrom-Halbleitersteller-Anordnung, bei der eine induktive Last, insbesondere ein Gleichstrommotor, über mindestens einen Halbleitersteller, der eine Parallelschaltung zweier steuerbarer Halbleiterventile (6, 7) gleicher Durchlaßrichtung enthält, aus einer Gleichspannungsquelle (3) gespeist ist, wobei in einer Steuereinrichtung eine Einrichtung zum Erzeugen von Taktfrequenzsignalen mit einem Sollwertgeber (15) zur Vorgabe des Puls-Pausenverhältnisses vorgesehen ist, im Strompfad jedes Halbleiterventiles ausgangsseitig ein induktiver Widerstand liegt, der eingangsseitige Verbindungspunkt (8) der Halbleiterventile (6, 7) mit einem Pol (+) der Gleichspannungsquelle (3) und der Verbindungspunkt der induktiven Widerstände mit einem Pol der Last (1) verbunden ist, die Verbindungspunkte (9, 10) der Halbleiterventile (6, 7) mit den induktiven Widerständen jeweils über eine Freilaufdiode (11 bzw. 12) an den anderen Pol (−) der Last (1) angeschlossen sind, und die Steuereinrichtung derart ausgebildet ist, daß zwei um 180° elektrisch versetzte Taktfrequenzsignale mit jeweils gleichem Aussteuergrad gebildet werden, die über je ein Stellglied (54 bzw. 55) den Halbleiterventilen (6, 7) so zugeführt werden, daß sie abwechselnd um 180° gegeneinander versetzt geöffnet und geschlossen werden, dadurch gekennzeichnet, daß jedes der beiden parallel geschalteten Halbleiterventile (6, 7) ausgangsseitig mit je einem Ende eines gemeinsamen Saugtransformators (4) mit Mittenanzapfung (5), dessen Teilinduktivitäten die induktiven Widerstände bilden, verbunden ist, daß parallel zum Halbleitersteller (2) ein weiterer gleich ausgebildeter Halbleitersteller (36) angeordnet ist, daß die Mittenanzapfungen (5) der Saugtransformatoren (4) der beiden Halbleitersteller (2, 36) mit den Enden eines dritten Saugtransformators (37) mit Mittenanzapfung (38) verbunden sind, wobei die Mittenanzapfung (38) des dritten Saugtransformators (37) an einen Pol (+) der induktiven Last (1) angeschlossen ist, und daß die Steuereinrichtung derart ausgebildet ist, daß die Taktfrequenzsignale für die beiden parallelen Halbleitersteller (2, 36) um 90° elektrisch gegeneinander versetzt sind.

2. Anordnung nach Anspruch 1, dadurch gekennzeichnet, daß bei Ausbildung der induktiven Last (1) als Gleichstrommotor zur Drehzahlsteuerung die Halbleiterventile (6, 7) mit einem jeweils konstanten Aussteuergrad (a) von zumindest annähernd 0,25, 0,5, 0,75 oder 1 betrieben werden.

3. Anordnung nach Anspruch 2, dadurch gekennzeichnet, daß dem Gleichstrommotor ein Erregerstromsteller zugeordnet ist, und daß zur Drehzahlsteuerung in den Zwischenbereichen von der Steuereinrichtung der Aussteuergrad (a) des Erregerstromstellers (40 und/oder 41) geändert wird.

4. Anordnung nach Anspruch 1, dadurch gekennzeichnet, daß parallel zu den beiden Halbleiterstellern (2, 36) mit Saugtransformatoren (4, 37) mindestens eine weitere Parallelschaltung von zwei Halbleiterstellern (42, 43) mit Saugtransformatoren (44) vorgesehen ist und die Mittenanzapfungen (38, 45) der nachgeschalteten dritten Saugtransformatoren (37, 44) auf einen vierten Saugtransformator (58) geschaltet sind, dessen Mittenanzapfung (59) mit einem Pol (+) der induktiven Last (1) verbunden ist.

5. Anordnung nach einem der vorhergehenden Ansprüche, dadurch gekennzeichnet, daß eine Schalteinrichtung (50) vorgesehen ist, die bei Abschaltung oder Ausfall eines Stellers die induktive Last automatisch auf den noch verbleibenden Steller schaltet.

6. Anordnung nach einem der Ansprüche 2–5, dadurch gekennzeichnet, daß eine Steuereinheit (14) vorgesehen ist, die mit einem Rechner ausgerüstet ist, der aus einem der Drehzahl des Gleichstromantriebes (16) proportionalen Istwert für einen über den Sollwert-Geber (15) vorgegebenen Drehzahl-Sollwert den Aussteuergrad für das Erreichen eines Stromwelligkeitsminimums und den bei dem vorgegebenen Aussteuergrad zum Erreichen der eingestellten Drehzahl erforderlichen Erregerstrom errechnet und entsprechende Steuersignale an die Halbleitersteller (2, 36) und die Erregerstrom-Halbleitersteller (40, 41) gibt.

## Claims

1. Direct current semiconductor regulator arrangement, in which an inductive load, particularly a direct current motor, is supplied from a direct voltage source (3) via at least one semiconductor regulator containing a parallel circuit of two controllable semiconductor rectifiers (6, 7) of the same conducting direction, wherein a device for producing clock frequency signals and having a setpoint generator (15) for fixing the pulse-pause ratio is provided in one control device, an inductive resistor lies in the current path of each semiconductor rectifier on the output side, the junction point (8), on the input side, of the semiconductor rectifiers (6, 7) is connected to one pole (+) of the direct voltage source (3) and the junction point of the inductive resistors is connected to one pole of the load (1), the junction points (9, 10) of the semiconductor rectifiers (6, 7) with the inductive resistors are connected by respective freewheeling diodes (11 or 12) to the other pole (−) of the load (1), and the control device is constructed in such a way that two clock frequency signals, offset electrically by 180° and having the same degree of modulation in each case, are formed and are supplied to the semiconductor rectifiers (6, 7) via respective final control elements (54 or 55) so that the semiconductor rectifiers are alternately opened and closed with an offset of 180° relative to one another, characterised in that each of the two semiconductor rectifiers (6, 7), connected in parallel, is connected on the output side with a respective end of a common draining transformer (4) having central tapping (5), whose partial inductances form the inductive resistors, in that a further similarly constructed semiconductor regulator (36) is arranged parallel to the semiconductor regulator (2), in that the central tapping (5) of the draining transformers (4) of the two semiconductor regulators (2, 36) are connected to the ends of a third draining transformer (37) having central tapping (38), wherein the central tapping (38) of the third draining transformer (37) is connected to one pole (+) of the inductive load (1), and in that the control device is constructed in such a way that the clock frequency signals for the two parallel semiconductor regulators (2, 36) are offset electrically relative to one another by 90°

2. Arrangement according to claim 1, characterised in that if the inductive load (1) is constructed as a direct current motor for speed control, the semiconductor rectifiers (6, 7) are driven in each case with a constant degree of modulation of at least approximately 0.25, 0.5, 0.75 or 1.

3. Arrangement according to claim 2, characterised in that an exciter current regulator is associated with the direct current motor, and in that the degree of modulation (a) of the exciter current regulator (40 and/or 41) is changed in order to control the speed in the intermediate regions of the control device.

4. Arrangement according to claim 1, characterised in that at least one further parallel circuit of two semiconductor regulators (42, 43) having draining transformers (44) is provided parallel to the two semiconductor regulators (2, 36) having draining transformers (4, 37), and the central tappings (38, 45) of the downstream third draining transformers (37, 44) are connected to a fourth draining transformer (58), whose central tapping (59) is connected to one pole (+) of the inductive load (1).

5. Arrangement according to one of the previous claims, characterised in that a switchgear (50) is provided, which, when one regulator is switched off or fails, automatically switches the inductive load on to the remaining regulator.

6. Arrangement according to one of claims 2 to 5, characterised in that a control unit (14) is provided and is equipped with a calculator which calculates from an actual value which is proportional to the speed of the direct current drive (16) the degree of modulation for achieving a current ripple maximum for a desired speed value which has been preset via the desired value generator (15), and the exciter current required to achieve the set speed in the case of the preset degree of modulation, and gives corresponding control signals to the semiconductor regulators (2, 36) and the exciter current semiconductor regulators (40, 41).

**Revendications**

1. Dispositif à régulateurs à semiconducteurs à courant continu, dans lequel une charge inductive, notamment un moteur à courant continu, est alimentée à partir d'une source de tension continue (3) par l'intermédiaire d'au moins un régulateur à semiconducteurs, qui contient un montage en parallèle de deux valves à semiconducteurs (6, 7) commandables, passantes dans le même sens, et dans lequel dans un dispositif de commande il est prévu un dispositif servant à produire des signaux à une fréquence d'horloge et comportant un générateur de valeurs de consigne (15) servant à prédéterminer le rapport impulsion-pause entre impulsions, une résistance inductive est située, côté sortie, dans la voie de courant de chaque valve semiconductrice, le point de jonction (8), situé du côté entrée, des valves à semiconducteurs (6, 7) est relié au pôle (+) de la source de tension continue (3), et le point de jonction des résistances inductives est relié à un pôle de la charge (1), les points de jonction (9, 10) des valves à semiconducteurs (6, 7) avec les résistances inductives sont raccordées à l'autre pôle (−) de la charge (1) par l'intermédiaire de diodes unidirectionnelles respectives (11 ou 12), et le dispositif de commande est agencé de telle sorte que deux signaux de fréquence d'horloge, décalés électriquement de 180°, sont formés avec un même degré de modulation, ces signaux étant envoyés par l'intermédiaire de circuits de réglage respectifs (54 et 55) aux valves à semiconducteurs (6, 7) de telle sorte que ces dernières sont ouvertes et fermées en alternance avec un décalage réciproque de 180°, caractérisé par le fait que chacune des deux valves à semiconducteurs (6, 7) branchées en parallèle est reliée, côté sortie, à une extrémité respective d'un transformateur suceur commun (4) comportant une prise médiane (5), dont les inductances partielles forment les résistances inductives, qu'un parallèle avec le régulateur à semiconducteurs (2) se trouve disposé un autre régulateur à semiconducteurs de constitution identique (36), que les prises médianes (5) des transformateurs suceurs (4) des deux régulateurs à semiconducteurs (2, 36) sont reliées aux extrémités d'un troisième transformateur suceur (37) comportant une prise médiane (38), la prise médiane (38) et le troisième transformateur suceur (37) étant raccordés à un pôle (+) de la charge inductive, et que le dispositif de commande est agencé de telle sorte que les signaux à la fréquence d'horloge pour les deux régulateurs à semiconducteurs (2, 36) montés en parallèle sont décalés de 90° électriques l'un par rapport à l'autre.

2. Dispositif suivant la revendication 1, caractérisé par le fait que, lors de la réalisation de la charge inductive (1) sous la forme d'un moteur à courant continu, pour la commande de la vitesse de rotation les valves à semiconducteurs (6, 7) fonctionnent avec un degré de modulation respectivement constant (a) égal au moins approximativement à 0,25, 0,5, 0,75 ou 1.

3. Dispositif suivant la revendication 2, caractérisé par le fait qu'un régulateur de courant d'excitation est associé au moteur à courant continu et que pour commander la vitesse de rotation dans les gammes intermédiaires du dispositif de commande, on modifie le degré de modulation (a) du régulateur de courant d'excitation (40 et/ou 41).

4. Dispositif suivant la revendication 1, caractérisé par le fait qu'au moins un autre montage en parallèle formé de deux régulateurs à semiconducteurs (42, 43) comportant des transformateurs suceurs (44) est prévu en parallèle avec les deux régulateurs à semiconducteurs (2, 36) comportant des transformateurs (4, 37), et que les prises médianes (38, 45) des troisièmes transformateurs suceurs (37, 44), branchés en aval, sont raccordés à un quatrième transformateur suceur (58), dont la prise médiante (59) est reliée à un pôle (+) de la charge inductive (1).

5. Dispositif suivant l'une des revendications précédentes, caractérisé par le fait qu'il est prévu un dispositif de commutation (5) qui, lors du débranchement ou de la défaillance d'un régulateur, raccorde automatiquement la charge inductive sur le régulateur qui subsiste.

6. Dispositif suivant l'une des revendications 2–5, caractérisé par le fait qu'il est prévu une unité de commande (14) qui est équipée d'un calculateur qui calcule, à partir d'une valeur réelle proportionnelle à la vitesse de rotation du dispositif d'entraînement à courant continu (16), pour une valeur de consigne de la vitesse de rotation prédéterminée par l'intermédiaire de transmetteur de valeurs de consigne (15), le degré de modulation pour l'obtention d'un minimum d'ondulation du courant et le courant d'excitation nécessaire pour le degré de modulation prédéterminé pour l'obtention de la vitesse de rotation réglée, et délivre des signaux de commande correspondant aux régulateurs à semiconducteurs (2, 36) et aux régulateurs à semiconducteurs du courant d'excitation (40, 41).

FIG 1

FIG 2

FIG 3

FIG 4

FIG 5

FIG 6